# EUROPÄISCHE PATENTSCHRIFT

(11) **EP 1 172 590 B1**
(45) Veröffentlichungstag und Bekanntmachung des Hinweises auf die Patenterteilung: **03.03.2004**
(21) Anmeldenummer: 00117220.4
(22) Anmeldetag: 11.08.2000
(51) Int. Cl.: F16K 11/00, F16K 27/00

(54) **Ventile für Gas, als Blöcke auf einer Montageplatte angeordnet**
Gas valves mounted as blocks on a mounting plate
Soupapes pour gaz montées par blocks sur un support

(30) Priorität: 12.07.2000 DE 10033885
(43) Veröffentlichungstag der Anmeldung: 16.01.2002
(73) Patentinhaber: Georg Schünemann GmbH, 28201 Bremen (DE)
(72) Erfinder: Altenrath, Klaus, Dipl. Ing., 42477 Radevormwald (DE); Mundt, Holger, Dipl.-Ing., 28279 Bremen (DE)
(74) Vertreter: Philipp, Matthias, Dr.

(56) Entgegenhaltungen:
- EP-A- 0 767 330
- EP-A- 0 846 872
- EP-A- 0 957 300
- DE-A- 2 547 847
- US-A- 5 048 569
- US-A- 5 222 524

## Beschreibung

Die Erfindung betrifft eine Ventilanordnung zum Steuern und Verteilen mindestens eines Gasstroms, insbesondere zum Füllen von Gasflaschen mit unterschiedlichen Gasen.

Bekannte Ventil- bzw. Armaturensysteme zum Füllen von Druckflaschen und sonstigen Vorratsbehältern mit Einzelgasen oder Gasgemischen aus unterschiedlichen Gasen bestimmter Zusammensetzung weisen eine Anzahl von Einzelventilen zur Steuerung und Rückflußverhinderung auf, die entweder einzeln angeordnet oder in Blöcken zusammengefaßt sind und durch entsprechende Gasleitungen miteinander verbunden sind. Derartige Ventilanordnungen sind dahingehend nachteilig, daß eine Demontage einzelner Ventile bzw. sonstiger Armaturen aufgrund der hohen Drücke, die bis über 300 bar liegen können, relativ aufwendig ist. Auch die Befestigung zahlreicher Einzelarmaturen auf Rahmen o.ä. und deren druckgasdichte Verbindung ist aufwendig und teuer. Hinzu kommen regelmäßig auftretende Dichtigkeitsprobleme, deren Behebung viel Arbeitszeit in Anspruch nimmt.

Aus der DE 2547847 ist eine Ventilanordnung zum Verteilen von hydraulischen oder pneumatischen Arbeitsmedien bekannt, bei der einzelne Ventile in Form von übereinander angeordneten Ventilblöcken ausgebildet sind, die auf einer Grundplatte befestigt sind. In den Ventilblöcken und in der Grundplatte sind durch Bohrungen Verteilerkanäle gebildet.

Aus der EP 0767330 A2, der EP 0846872 A1 und der EP 0957300 A2 sind Umschaltventile in Manifold-Bauart bekannt, die in Blockbauweise ausgeführt sind.

Aus der US 5048569 ist eine Ventilkomponentengruppe mit einer Abschlußplatte bekannt, in der Fluidleitungen angeordnet sind und auf der ein Hauptventil sitzt. In einer Zwischenplatte sind Steuerventile für das Hauptventil angeordnet.

Aus der US 522524 ist eine Steuervorrichtung für fluide Medien bekannt, bei der in einer Grundplatte Kanäle ausgebildet sind, die mit auf die Grundplatte aufgesetzten Ventilblöcken zusammenwirken.

Die Aufgabe der Erfindung besteht darin, eine gattungsgemäße Ventilanordnung bereitzustellen, bei der der Aufwand zur Befestigung und Verbindung der Einzelarmaturen vermindert ist, Dichtigkeitsprobleme leichter behoben werden können und Servicearbeiten (Ausbau einzelner Armaturen usw.) leichter durchgeführt werden können.

Diese Aufgabe wird erfindungsgemäß durch eine Ventilanordnung nach Anspruch 1 gelöst. Bevorzugte Ausgestaltungen der Erfindung sind in den Unteransprüchen beschrieben. Außerdem soll die Ventilanordnung eine größere Sicherheit gegen unbeabsichtigtes und unbemerktes Rückströmen von Gasen in eine Eingangsleitung bieten.
Die Erfindung wird nachfolgend anhand eines Ausführungsbeispiels unter Bezugnahme auf eine Zeichnung erläutert, wobei
Fig. 1 schematisch eine bekannte Ventilanordnung mit einem Absperrventil und einem Rückschlagventil je Gasart zeigt;
Fig. 2 schematisch eine erfindungsgemäße Ventilanordnung mit drei Absperrventilen zeigt;
Fig. 3 eine Seitenansicht einer Ausführungsform der erfindungsgemäßen Ventilanordnung zeigt;
Fig. 4 bis 7 unterschiedliche Schnittansichten der Ventilanordnung nach Fig. 3 zeigen; und
Fig. 8 eine optische/induktive Überwachungseinrichtung zur Feststellung der Stellung eines Ventils zeigt.

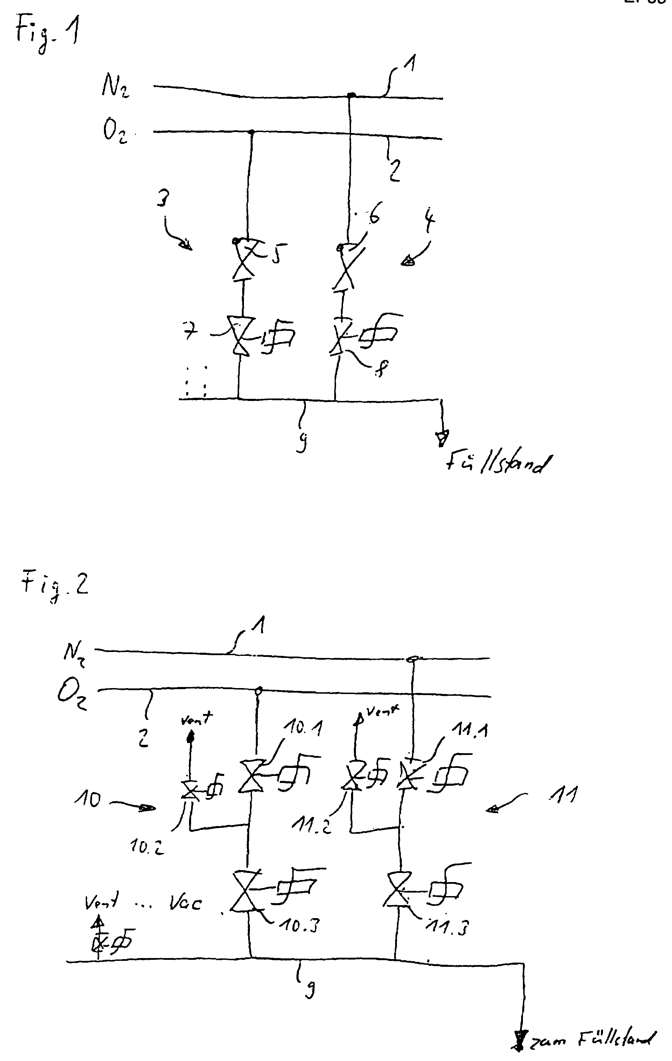

Fig. 1 zeigt schematisch eine herkömmliche Ventilanordnung zum Füllen von an einem Füllstand befindlichen Druckflaschen mit einem Gasgemisch aus z.B. Sauerstoff und Stickstoff, wobei unterschiedliche Mischungsverhältnisse vorgebbar bzw. einstellbar sind.

Die an Druckgasleitungen bzw. Versorgungsleitungen 1, 2 anstehenden Gase werden jeweils über eine Zuführungsventilanordnung 3 bzw. 4 in die Flaschen geleitet, wobei jede Zuführungsventilanordnung aus einem Rückschlagventil 5 bzw. 6 und einem steuerbaren Absperrventil 7 bzw. 8 besteht.

Zur Erläuterung der Vorgehensweise beim Füllen von Flaschen sei der Fall angenommen, daß Gasmischungen mit einem Druck von 250 bar und einem Sauerstoffpartialdruck von 50 bar abgefüllt werden sollen. Grundsätzlich wird das Gas mit dem niedrigsten Partialdruck zuerst abgefüllt, d.h. in diesem Fall Sauerstoff, wobei die vorab entlüfteten (restentleerten) und meist mit Unterdruck weitestgehend entleerten Flaschen über die Zuführungsventilanordnung 3 mit Sauerstoff bis 50 bar gefüllt werden. Bei diesem ersten Füllvorgang ist das Absperrventil 7 geöffnet, wobei das Rückschlagventil 5 durch die Druckdifferenz geöffnet wird, während das Absperrventil 8 (und das Rückschlagventil 6) geschlossen ist.

Nach Erreichen des vorgesehenen Partialdrucks in den Flaschen (z.B. 50 bar) wird das Absperrventil 7 geschlossen und das Absperrventil 8 geöffnet, um die restliche Füllung mit der zweiten Gasart, in diesem Falle Stickstoff, einzuleiten. Das Rückschlagventil 6 öffnet aufgrund des Druckunterschieds selbsttätig, während das Absperrventil 7 und das Rückschlagventil 5 der ersten Zuführungsventilanordnung geschlossen bleiben. Nach Abschluß des Füllvorgangs wird auch das zweite Absperrventil 8 geschlossen.

Im Falle einer Undichtigkeit in einem Ventil innerhalb einer Zuführungsventilanordnung 3 oder 4 besteht eine zusätzliche Sicherheit durch das jeweils andere Ventil, so daß auch bei unterschiedlichen Drücken in den Versorgungsleitungen 1, 2 normalerweise kein Gas aus der zum Füllstand führenden Sammel- bzw. Verteilleitung 9 in eine Versorgungsleitung niedrigeren Drucks zurückströmen kann. Allerdings ist die Dichtigkeit der Ventile von außen nicht erkennbar, so daß trotz der an sich doppelten Sicherheit der Fall eintreten kann, daß - von außen unerkannt - ein unter hohem Druck stehendes Gas bzw. Gasgemisch aus der Verteilleitung 9 durch eine defekte Zuführungsventilanordnung in eine Versorgungsleitung niedrigeren Drucks strömt. Dies kann ersichtlich gravierende Folgen haben.

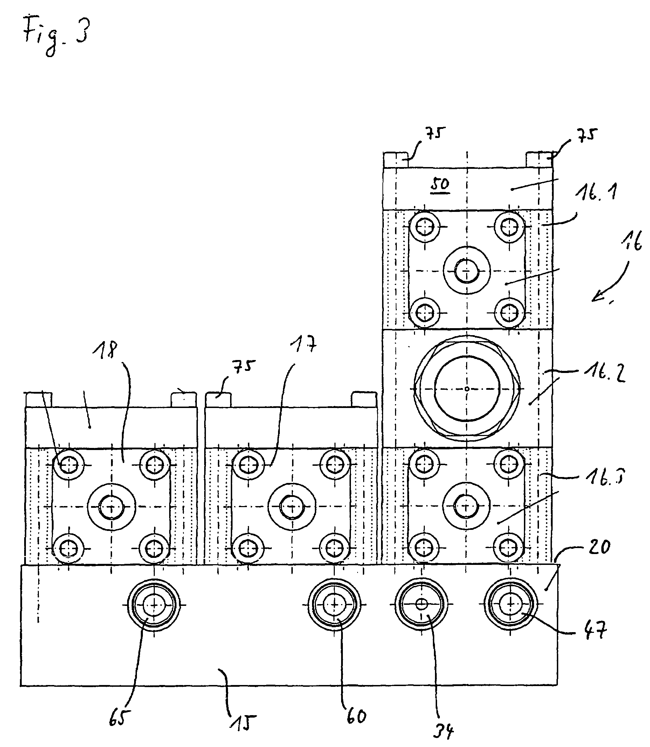

Fig. 2 zeigt eine erfindungsgemäße Ventilanordnung, die unter Bezugnahme auf Fig. 3 bis 7 in konkreter Ausgestaltung noch zu erläutern ist, bei der ein unbeabsichtigtes und unerkanntes Rückströmen in eine Versorgungsleitung nicht mehr auftreten kann. Die zwischen den Versorgungsleitungen 1, 2 und der Verteilleitung 9 angeordneten Zuführungsventilanordnungen 10, 11 bestehen erfindungsgemäß aus insgesamt drei Absperrventilen 10.1, 10.2, 10.3 und 11.1, 11.2, 11.3. Zur Erläuterung der Funktion sei ein Füllvorgang mit Stickstoff betrachtet, nachdem die zu befüllenden Flaschen bereits mit Sauerstoff auf bspw. 50 bar gefüllt worden sind. Zur Durchleitung von Stickstoff durch die Zuführungsventilanordnung 11 werden die Absperrventile 11.1 und 11.3 geöffnet, während das Absperrventil 11. 2 geschlossen bleibt. In der Zuführungsventilanordnung 10 für Sauerstoff sind die Absperrventile 10.1 und 10.3 geschlossen, während das zusätzliche Absperrventil 10.2 geöffnet ist. Dadurch besteht die Möglichkeit, eine Leckage des Absperrventils 10.1 und/oder des Absperrventils 10.3 sofort zu erkennen, da in einem solchen Fall Gas (entweder aus der zugehörigen Versorgungsleitung oder der Verteilleitung) aus dem zweiten Absperrventil 2 austreten würde. Entsprechendes gilt für eine Undichtigkeit innerhalb der zweiten Zuführungsventilanordnung 11.

Nachfolgend wird auf Fig. 3 bis 7 Bezug genommen, die eine konkrete Ausführung der Ventilanordnung zeigen. Fig. 3 zeigt eine Seitenansicht einer erfindungsgemäßen Ventilanordnung, wobei auf einer massiven Grundplatte 15 eine aus drei einzelnen Absperrventilen 16.1, 16.2 und 16.3 bestehende Zuführungsventilanordnung 16, ein Ventilationsventil bzw. Entlüftungsventil 17 sowie eine Vakuumventil 18 angeordnet sind.

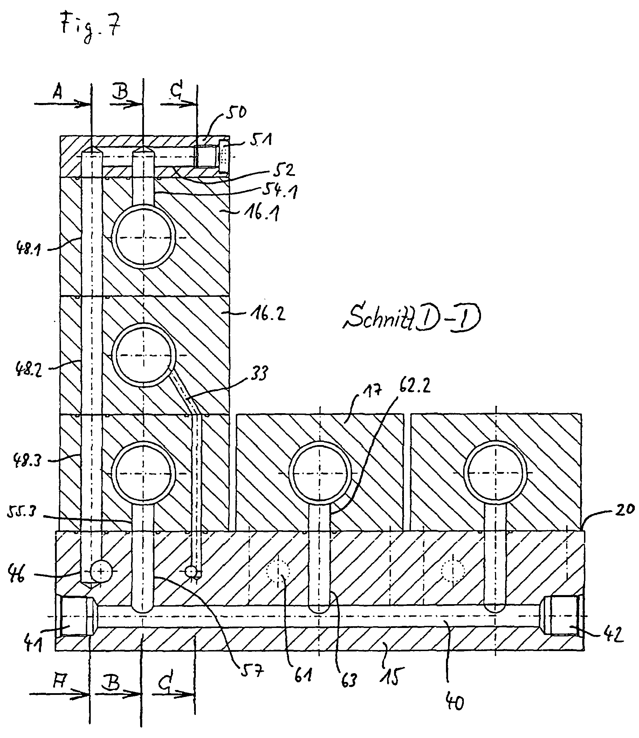

Wie insbesondere Fig. 7 deutlich zeigt, weisen die einzelnen Ventile jeweils ein massives, block- bzw. plattenförmiges Gehäuse auf, an dem jeweils zumindest eine Seite als ebene Auflagefläche zur Verbindung mehrerer Ventile untereinander bzw. zum Anschluß an eine als ebene Montagefläche 20 ausgebildete Oberseite der Grundplatte 15 ausgebildet ist.

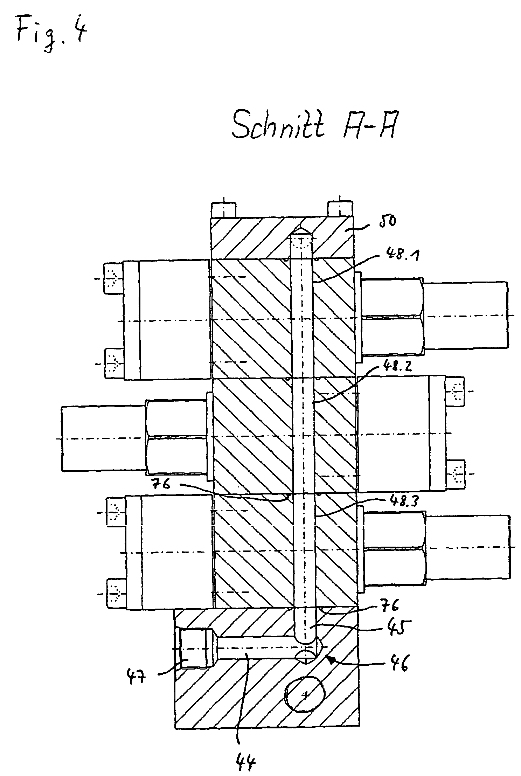

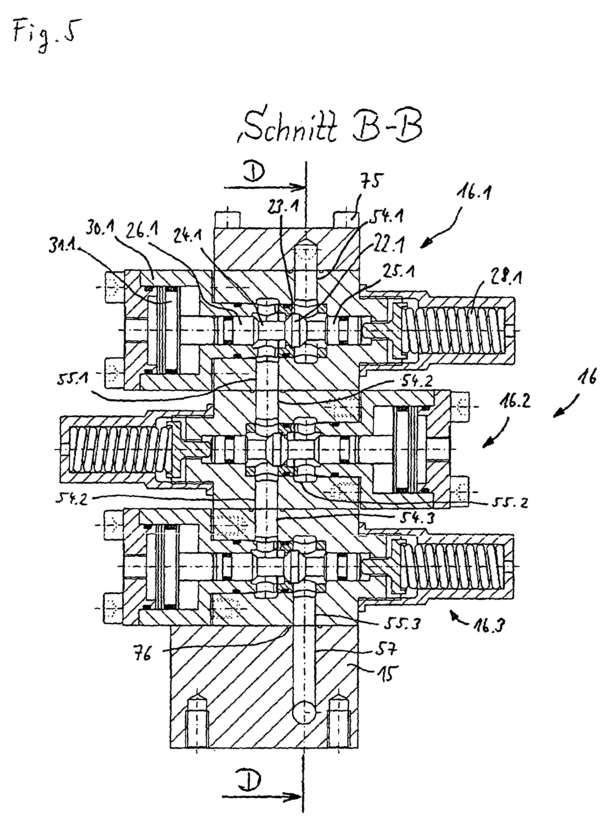

Anhand Fig. 4 bis 7 wird nachfolgend Anschluß und Aufbau der Zuführungsventilanordnung 16 im einzelnen erläutert. Aus Fig. 5 geht der Aufbau der einzelnen Ventile hervor, wobei beispielhaft das oberste Ventil 16.1 beschrieben wird. Ein Schließkörper bzw. Ventilkegel 22.1 wirkt mit einem Ventilsitz 23.1 zusammen und ist mit einer Achse 24.1 ausgebildet, an deren Enden Druckentlastungskolben 25.1 und 26.1 ausgebildet sind. Eine Druckfeder 28.1 spannt das Ventil in Schließrichtung bzw. den Schließkörper in Richtung auf den Ventilsitz vor, während auf der anderen Seite ein in einem Steuerzylinder 30.1 geführter, druckfluidbeaufschlagbarer Steuerkolben 31.1 eine Öffnung des Ventils bewirken kann.

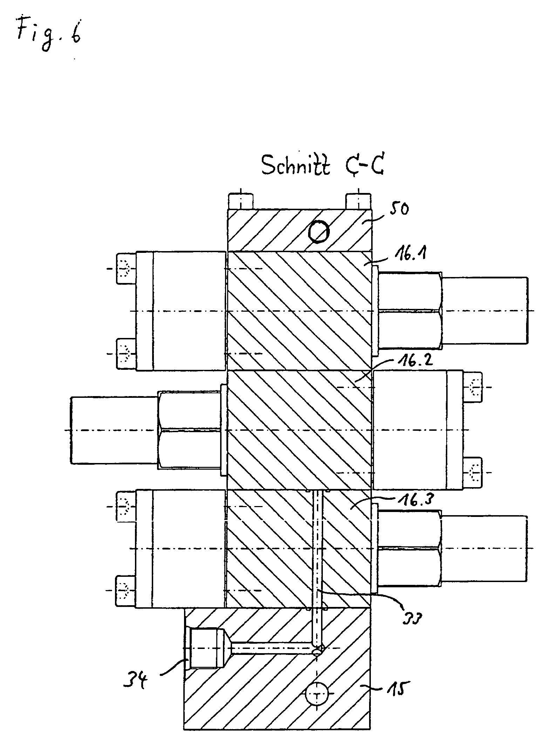

Das Absperrventil 16.3 ist mit Ausnahme des Verlaufs von Eintritts- und Austrittsbohrungen im Gehäuse identisch mit dem vorstehend beschriebenen Absperrventil 16.1, während sich das mittlere Absperrventil 16.2 neben der um 180° gedrehten Anordnung dadurch unterscheidet, daß der auf der dem Schließkörper abgewandten Seite des Ventilsitzes befindliche Fluidraum (zwischen Ventilsitz und steuerkolbenseitigem Druckentlastungskolben), der den zweiten Anschluß 55.2 entspricht, über eine in Fig. 6 und 7 dargestellte Belüftungsleitung 33 mit einem Belüftungsanschluß 34 in Verbindung steht.

Nachfolgend werden die Anschlüsse und innerhalb der Grundplatte bzw. der Ventilgehäuse liegenden Verbindungsbohrungen erläutert. Wie Fig. 7 zeigt, weist die Grundplatte 15 eine sich in deren Längsrichtung erstreckende Verteilleitung 40 auf, die an den Stirnseiten der Grundplatte mündet und mit Verteilanschlüssen 41, 42 versehen ist, mit denen bspw. zu füllende Druckflaschen zu verbinden sind. Wie Fig. 3, 4 und 7 zeigen, weist die Grundplatte ferner eine aus zwei rechtwinklig zueinander verlaufenden Bohrungsabschnitten 44, 45 gebildete Eingangsleitung 46 auf, die von einem zum Einleiten eines Gases aus einer nicht dargestellten Versorgungsleitung vorgesehenen Eingangsanschluß 47 in einer Seitenwand der Grundplatte ausgeht und in der Montagefläche 20 mündet.

Fig. 4 und 7 zeigen, wie sich die Eingangsleitung 46 über entsprechende, mit der Bohrung 45 fluchtende Bohrungen 48.1, 48.2 und 48.3 in den einzelnen Ventilgehäusen bis in eine Deckplatte 50 über dem ersten Absperrventil 16.1 fortsetzt. Dort verbindet ein nach außen durch einen Stopfen 51 abgeschlossener, horizontaler Bohrungsabschnitt 52 die Eingangsleitung mit einem ersten Anschluß 54.1 des ersten Absperrventils 16.1.

Die reihenschaltungsartige Verbindung der drei Absperrventile 16.1, 16.2 und 16.3 ergibt sich aus Fig. 5. Der erste Anschluß 54.1 des ersten Absperrventils 16.1 ist wie vorstehend ausgeführt über die Deckplatte und die Bohrungsabschnitte 48 mit der Eingangsleitung 46 verbunden, während ein zweiter Anschluß 55.1 des ersten Absperrventils 16.1 unmittelbar mit einem ersten Anschluß 54.2 des zweiten Absperrventils 16.2 verbunden ist, wobei der erste Anschluß 54.2 des zweiten Absperrventils 16.2 (und damit auch der zweite Anschluß 55.1 des ersten Absperrventils 16.1) unmittelbar mit einem ersten Anschluß 54.3 des dritten Absperrventils 16.3 verbunden ist. Der zweite Anschluß 55.2 des zweiten Absperrventils 16.2 ist wie bereits erwähnt mit der Belüftungsleitung 33 und dem Belüftungsanschluß 34 verbunden. Der zweite Anschluß 55.3 des dritten Absperrventils 16.3 schließt unmittelbar an eine in die Montagefläche 20 mündende, mit der Verteilleitung 40 verbundene Verbindungsleitung 57 bzw. -bohrung an. Somit ist ein durchgehender Gasströmungsweg zwischen dem Eingangsanschluß 47 und der Verteilleitung 40 durch die drei Absperrventile 16.2, 16.2 und 16.3 hergestellt.

Nachfolgend werden die Verbindungsbohrungen für den Anschluß der Ventilations- und Vakuumventile 17 bzw. 18 erläutert. Das Ventilationsventil 17 entspricht in Aufbau und Anordnung auf der Grundplatte 15 im wesentlichen dem dritten Absperrventil 16.3, wobei auch hier eine einen ersten Anschluß (nicht dargestellt) des Ventilationsventils 17 mit einem Ventilations-Eingangsanschluß 60 verbindende, aus zwei senkrecht zueinander verlaufenden Bohrungen in der Grundplatte 15 gebildete Ventilations-Eingangsleitung 61 (in Fig. 7 angedeutet) verhanden ist. Ein zweiter Anschluß 62.2 des Ventilationsventils 17 ist über eine der Verbindungsleitung 57 entsprechende Verbindungsleitung bzw. -bohrung 63 mit der Verteilleitung 40 verbunden. Der zweite Anschluß 62.2 des Ventilationsventils 17 ist bevorzugt der schließkörperseitige Anschluß des Ventils, damit die im Betrieb auftretenden hohen Drücke in der Verteilleitung 40 bzw. der Verbindungsleitung 63 eine zusätzliche Schließkraft erzeugen. Hierfür weist der entsprechende Druckentlastungskolben eine etwas kleinere Fläche als der Ventilsitz auf.

Das Vakuumventil 18 entspricht in Aufbau, Anordnung und Anschluß dem Ventilationsventil 17 und wird daher nicht im einzelnen erläutert. An einen mit einem ersten Eingang des Vakuumventils 18 verbundenen Vakuumanschluß 65 ist eine Vakuumquelle anschließbar, um Restgas aus der Verteilleitung 40 abzuziehen.

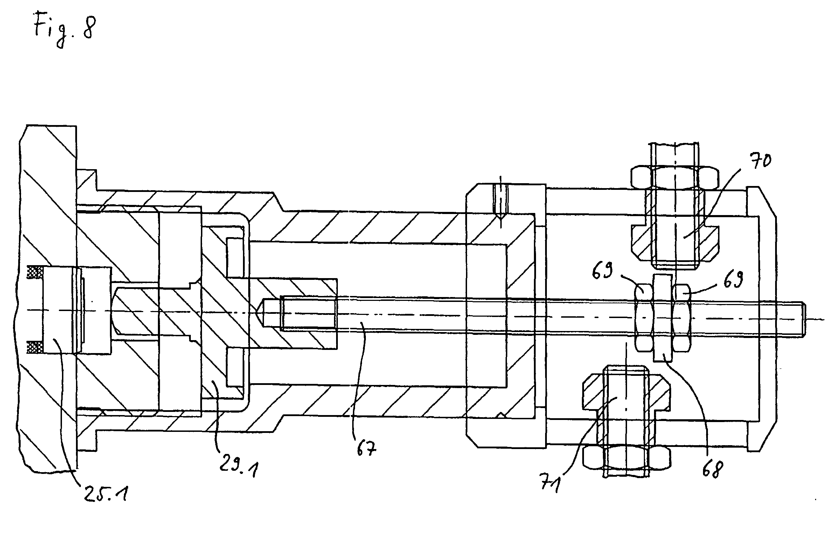

Fig. 8 erläutert eine optische Anzeige und eine berührungsfreie Überwachungseinrichtung zur Erkennung der Ventilstellung. Fig. 8 zeigt links einen Endabschnitt des Druckentlastungskolbens 25.1, auf den die nicht dargestellte Druckfeder 28.1 (Fig. 5) über einen Federteller 29.1 einwirkt. An dem Federteller 29.1 ist eine Gewindestange 67 befestigt, auf dem ein zu erfassendes Sensorelement 68 zwischen zwei Muttern 69 einstellbar gehalten ist. Das Sensorelement 68 kann von zwei Sensoren 70, 71 in zwei Grenzstellungen erfaßt werden. Die Gewindestange 67 ist so lang, daß sie in einer Grenzstellung bzw. in Öffnungsstellung des Ventils, wie Fig. 8 zeigt, mit ihrem Endabschnitt aus dem Gehäuse austritt, und in einer anderen Grenzstellung bzw. in Schließstellung des Ventils bündig mit dem Gehäuse abschließt. Dadurch ergibt sich zusätzlich eine optische Anzeige der Ventilstellung.

Fig. 3 bis 7 zeigen eine Ausführungsform der erfindungsgemäßen Ventilanordnung, bei der auf einer gemeinsamen, tragenden Grundplatte (lediglich) eine Zuführungsventilanordnung für eine Gasart sowie ein Vakuum- und ein Ventilationsventil angebracht sind, die somit grundsätzlich dem Aufbau nach Fig. 2 entspricht, wobei dort zwei Zuführungsventilanordnungen für zwei Gasarten dargestellt sind. Selbstverständlich ist der Erfindungsgedanke entsprechend einer Anordnung für zwei oder mehr unterschiedliche Gasarten erweiterbar, wobei dann auf einer entsprechend verlängerten Grundplatte zwei oder mehr Zuführungsventilanordnungen für eine entsprechende Anzahl von Gasarten mit jeweils drei einzelnen Absperrventilen (und weiterhin ein Ventilations- und ein Vakuumventil) angebracht sind. Wie aus Fig. 3 sowie den Schnittdarstellungen erkennbar ist, sind die einzelnen Ventile bzw. Zuführungsventilanordnungen mit jeweils vier Bolzen 75 auf der Grundplatte befestigt, wobei die Abdichtung der jeweils in Grundplatte und Ventilgehäuse bzw. in benachbarten Ventilgehäusen fluchtend angeordneten Bohrungen durch eingelegte Dichtungen 76 gewährleistet ist.

Zum Füllen einer oder mehrerer Druckflaschen mit einem Gas oder Gasgemisch werden die Flaschen zunächst an einen oder beide der Füll- bzw. Verteilanschlüsse 41, 42 der Verteilleitung 40 angeschlossen. Nach Öffnen der Flaschenventile erfolgt zunächst eine Öffnung des Ventilationsventils 17, damit über den Ventilationsanschluß 60 Restmengen von in den Flaschen vorhandenen Gasen oder Gasgemischen abgelassen werden können. Nach Druckabbau in den Flaschen wird das Ventilationsventil geschlossen. Bedarfsweise erfolgt über das Vakuumventil 18 eine weitergehende Absaugung restlicher Gasmengen mittels einer an den Vakuumanschluß 65 angeschlossenen Vakuumquelle. Nachdem beide Ventile 17 und 18 geschlossen sind, erfolgt die Befüllung der Flaschen durch Öffnen des ersten und dritten Absperrventils 16.1, 16.3, während das zweite Absperrventil 16.2 geschlossen bleibt. Wenn die Flaschen auf einen gewünschten Druck aufgefüllt worden sind, werden die beiden Ventile 16.1 und 16.3 geschlossen. Nun kann in entsprechender Weise eine weitere Befüllung mittels einer weiteren, in Fig. 3 bis 7 nicht dargestellten Zuführungsventilanordnung erfolgen. Während dieses weiteren Füllvorgangs wird das zweite Absperrventil 16.2 der ersten Zuführungsventilanordnung (und ggf. entsprechende zweite Absperrventile weiterer, nicht am aktuellen Füllvorgang beteiligter Zuführungsventilanordnungen) geöffnet, so daß einerseits mit Sicherheit verhindert wird, daß im Falle von Undichtigkeiten in jeweiligen ersten und dritten Absperrventilen ein unerwünschter Rückfluß in Richtung auf den Eingangsanschluß 47 bzw. eine Versorgungsleitung erfolgen kann, und andererseits eine derartige Undichtigkeit sogleich daran erkannt wird, daß ein Leckgasstrom über das geöffnete zweite Absperrventil (z.B. 16.2) aus einem entsprechenden Belüftungsanschluß (z.B. 34) austritt.

Wenn bei Verwendung von Gasen, bei denen eine erhöhte Sicherheit gegen Rückvermischung nicht unbedingt erforderlich ist, eine einfachere Anordnung mit lediglich einem Rückschlagventil und einem Absperrventil ausreicht, wie sie in Fig. 1 schematisch erläutert ist, kann dies selbstverständlich auch mittels der erfindungsgemäßen blockartigen Ventilanordnung erreicht werden, indem lediglich die in Fig. 3 bis 7 dargestellte Zuführungsventilanordnung 16 durch eine vereinfachte Zuführungsventilanordnung ersetzt wird, die lediglich ein Absperrventil und ein Rückschlagventil aufweist. In diesem Fall könnte auch die Belüftungsleitung 33 und der Belüftungsanschluß 34 entfallen. Auch bei einer derartigen Anordnung bleiben die wesentlichen erfindungsgemäßen Vorteile im Hinblick auf Vereinfachung von Montage und Wartung erhalten.

## Patentansprüche

1. Ventilanordnung zum Steuern und Verteilen mindestens einer Gasart, insbesondere zum Füllen von Gasflaschen mit Mischungen aus unterschiedlichen Gasen, wobei die Ventilanordnung eine für alle Gasarten gemeinsame Verteilleitung (9, 40) und je Gasart sowohl eine Eingangsleitung (1, 2, 46) als auch eine zwischen Eingangsleitung (1, 2, 46) und Verteilleitung (9, 40) geschaltete Zuführungsventilanordnung (10, 11, 16) aufweist, **dadurch gekennzeichnet, daß** die (jede) Zuführungsventilanordnung (10, 11, 16) ein erstes (10.1, 11.1, 16.1), ein zweites (10.2, 11.2, 16.2) und ein drittes Absperrventil (10.3, 11.3, 16.3) aufweist, wobei
a) ein erster Anschluß des ersten Absperrventils (10.1, 11.1, 16.1) mit der Eingangsleitung (1, 2, 46) verbunden ist,
b) ein zweiter Anschluß des ersten Absperrventils (10.1, 11.1, 16.1), ein erster Anschluß des zweiten Absperrventils (10.2, 11.2, 16.2) und ein erster Anschluß des dritten Absperrventils (10.3, 11.3, 16.3) miteinander verbunden sind,
c) ein zweiter Anschluß des zweiten Absperrventils (10.2, 11.2, 16.2) mit Umgebungsluft verbunden ist, und
d) ein zweiter Anschluß des dritten Absperrventils (10.3, 11.3, 16.3) mit der Verteilleitung (9, 40) verbunden ist,
wobei die drei Absperrventile (16.1, 16.2, 16.3) in Block- bzw. Plattenbauweise ausgeführt sind, ebene Auflageflächen aufweisen und zum gesteuerten Durchleiten eines Gases mit diesen auf einer ebenen Montagefläche (20) einer Grundplatte (15) bzw. aufeinander aufliegend gehalten sind, mit einer als zentrale Bohrung in der Grundplatte (15) ausgeführten Verteilleitung (40), die mit einem insbesondere zur Verbindung mit zu füllenden Gasflaschen vorgesehenen Abgabeanschluß (41, 42) in einer Seitenwand der Grundplatte (15) verbunden ist, mit einer durch mindestens eine Bohrung (44, 45) in der Grundplatte (15) gebildeten Eingangsleitung (46), die von einem zum Einleiten eines Gases vorgesehen Eingangsanschluß (47) in einer Seitenwand der Grundplatte (15) ausgeht und in der Montagefläche (20) mündet, mit einer einerseits in der Montagefläche (20) und andererseits in der Verteilleitung (40) mündenden Verbindungsleitung (57) in der Grundplatte (15), und wobei ein erster Anschluß (54.1) des ersten Absperrventils (16.1) mit dem in der Montagefläche (20) mündenden Ende der Eingangsleitung (46) verbunden ist und ein zweiter Anschluß (55.1) des ersten Absperrventils (16.1) mit dem in der Montagefläche (20) mündenden Ende der Verbindungsleitung (57) gasdicht abschließt, so daß sämtliche Leitungen durch Bohrungen gebildet und in Grundplatte (15) und/oder Ventilgehäuse(n) integriert sind und Ein- und Ausgangsanschlüsse der Ventilanordnung an einer oder mehreren Seitenfläche(n) der Grundplatte (15) liegen.

2. Ventilanordnung nach Anspruch 1, **dadurch gekennzeichnet, daß** ein Ventilationsventil (17) in Block- bzw. Plattenbauweise mit einer ebenen Auflagefläche auf der Montagefläche (20) aufliegend gehalten ist, wobei die Grundplatte (15) eine einerseits in der Montagefläche (20) und andererseits in der Verteilleitung (40) mündende Verbindungsleitung (63) und eine durch mindestens eine Bohrung in der Grundplatte gebildete Ventilationsleitung (61) aufweist, die von einem Ventilationsanschluß (60) in einer Seitenwand der Grundplatte (15) ausgeht und in der Montagefläche (20) mündet, wobei ein erster Anschluß des Ventilationsventils (17) mit dem in der Montagefläche (20) mündenden Ende der Ventilationsleitung (61) und ein zweiter Anschluß (62.2) des Ventilationsventils mit dem in der Montagefläche mündende Ende der Verbindungsleitung (63) gasdicht abschließt.

3. Ventilanordnung nach Anspruch 1 oder 2, **dadurch gekennzeichnet, daß** ein Vakuumventil (18) in Block- bzw. Plattenbauweise mit einer ebenen Auflagefläche auf der Montagefläche (20) aufliegend gehalten ist, wobei die Grundplatte (15) eine einerseits in der Montagefläche (20) und andererseits in der Verteilleitung (40) mündende Verbindungsleitung und eine durch mindestens eine Bohrung in der Grundplatte (15) gebildete Vakuumleitung aufweist, die von einem Vakuumanschluß (65) in einer Seitenwand der Grundplatte (15) ausgeht und in der Montagefläche (20) mündet, wobei ein erster Anschluß des. Vakuumventils (18) mit dem in der Montagefläche (20) mündenden Ende der Vakuumleitung und ein zweiter Anschluß des Vakuumventils mit dem in der Montagefläche (20) mündenden Ende der Verbindungsleitung gasdicht abschließt.

4. Ventilanordnung nach einem der vorangehenden Ansprüche, **dadurch gekennzeichnet, daß** an dem ersten Absperrventil (10.1, 11.1, 16.1) ein Rückschlagventil angeordnet ist, um einen Rückfluß von den Abgabeanschlüssen (41, 42) bzw. der Verteilleitung (40) zu dem Eingangsanschluß (47) bzw. der Eingangsleitung (1, 2) zu verhindern.

5. Ventilanordnung nach Anspruch 4, **dadurch gekennzeichnet, daß** das Rückschlagventil in Block- bzw. Plattenbauweise ausgeführt ist und auf einer weiteren Auflagefläche des ersten Absperrventils (16.1) aufliegend gehalten ist, wobei die Ventile verbindende Leitungen durch Bohrungen in Ventilgehäusen gebildet und vollständig in diese integriert sind.

6. Ventilanordnung nach einem der Ansprüche 1 bis 5, **dadurch gekennzeichnet, daß** eine Auflagefläche des dritten Absperrventils (16.3) auf der Montagefläche (20) aufliegt und das erste (16.1) und zweite Absperrventil (16.2) parallele Auflageflächen aufweisen, wobei der erste Anschluß (54.1) des ersten Absperrventils (16.1) durch eine aus miteinander fluchtenden Bohrungen (48.1, 48.2, 48.3) in den drei Absperrventilen gebildete Leitung mit der Eingangsleitung (46) verbunden ist.

7. Ventilanordnung nach einem der vorangehenden Ansprüche, **dadurch gekennzeichnet, daß** wenigstens ein Absperrventil in Schließrichtung federbelastet (28.1) ist.

8. Ventilanordnung nach einem der vorangehenden Ansprüche, **dadurch gekennzeichnet, daß** wenigstens ein Absperrventil eine Druckentlastung (25.1, 26.1) aufweist.

9. Ventilanordnung nach Anspruch 8, **dadurch gekennzeichnet, daß** das zumindest eine Absperrventil (16.1) einen mit einem Ventilsitz (23.1) zusammenwirkenden Schließkörper (22.1) aufweist, der mit mindestens einem Entlastungskolben (25.1, 26.1) verbunden ist, dessen Durchmesser mit dem Durchmesser des Ventilsitzes im wesentlichen übereinstimmt.

10. Ventilanordnung nach einem der vorangehenden Ansprüche, **dadurch gekennzeichnet, daß** wenigstens ein Absperrventil (16.1) einen druckfluidbeaufschlagbaren Steuerkolben (31.1) aufweist.

11. Ventilanordnung nach einem der Ansprüche 1 bis 10, **dadurch gekennzeichnet, daß** der erste Anschluß (54.1) des ersten (16.1) und der zweite Anschluß (55.3) des dritten Absperrventils (16.3) die von einem Ventilsitz (23.1) aus gesehen schließkörperseitigen Anschlüsse sind, so daß bei Überdruck an diesen Anschlüssen eine (zusätzliche) Schließkraft erzeugt wird.

12. Ventilanordnung nach einem der Ansprüche 1 bis 11, **dadurch gekennzeichnet, daß** der erste Anschluß (54.2) des zweiten Absperrventils (16.2) der von einem Ventilsitz aus gesehen schließkörperseitige Anschluß ist, so daß bei Überdruck an diesem Anschluß eine (zusätzliche) Schließkraft erzeugt wird.

13. Ventilanordnung nach einem der vorangehenden Ansprüche, **dadurch gekennzeichnet, daß** mindestens ein Absperrventil (16.1) eine optische Anzeige und/oder Überwachungseinrichtung (67, 68, 69, 70, 71), insbesondere mit berührungsfreien Induktivsensoren, zur Erkennung der Ventilstellung aufweist.

## Claims

1. Valve arrangement for controlling and distributing at least one type of gas, in particular for filling gas bottles with mixtures of different gases, wherein the valve arrangement has a common distribution line (9, 40) for all gas types and has, for each gas type, both an input line (1, 2, 46) and also a supply valve arrangement (10, 11, 16) connected between the input line (1, 2, 46) and distribution line (9, 40), **characterised in that** the (each) supply valve arrangement (10, 11, 16) has a first (10.1, 11.1, 16.1) and a second (10.2, 11.2, 16.2) and a third shut-off valve (10.3, 11.3, 16.3), wherein
a) a first connection of the first shut-off valve (10.1, 11.1, 16.1) is connected to the input line (1, 2, 46),
b) a second connection of the first shut-off valve (10.1, 11.1, 16.1), a first connection of the second shut-off valve (10.2, 11.2, 16.2) and a first connection of the third shut-off valve (10.3, 11.3, 16.3) are connected to each other,
c) a second connection of the second shut-off valve (10.2, 11.2, 16.2) is in communication with the surrounding air, and
d) a second connection of the third shut-off valve (10.3, 11.3, 16.3) is connected to the distribution line (9, 40),
wherein the three shut-off valves (16.1, 16.2, 16.3) are formed in a block-like or plate-like construction, have flat support surfaces and, for the purpose of controlled conveyance of a gas, are held with these surfaces lying on a flat mounting surface (20) of a base plate (15) or lying against each other, having a distribution line (40) which is formed as a central bore in the base plate (15) and is connected to a discharge connection (41, 42), provided in particular for connection to gas bottles to be filled, in a side wall of the base plate (15), having an input line (46) which is formed by at least one bore (44, 45) in the base plate (15) and which emerges from an input connection (47), provided for the introduction of gas, in a side wall of the base plate (15) and which issues in the mounting surface (20), having a connection line (57) in the base plate (15), which connection line issues on the one hand in the mounting surface (20) and on the other hand in the distribution line (40), and wherein a first connection (54.1) of the first shut-off valve (16.1) is connected to the end of the input line (46) issuing in the mounting surface (20), and a second connection (55.1) of the first shut-off valve (16.1) terminates in a gas-tight manner with the end of the connection line (57) issuing in the mounting surface (20), so that all lines are formed by bores and are integrated in the base plate (15) and/or valve housing(s), and input and output connections of the valve arrangement lie on one or a plurality of lateral surface(s) of the base plate (15).

2. Valve arrangement as claimed in claim 1, **characterised in that**, in a block-like or plate-like construction, a ventilation valve (17) is held with a flat support surface lying on the mounting surface (20), wherein the base plate (15) has a connection line (63) issuing on the one hand in the mounting surface (20) and on the other hand in the distribution line (40) and has a ventilation line (61) formed by at least one bore in the base plate, which ventilation line emerges from a ventilation connection (60) in a side wall of the base plate (15) and issues in the mounting surface (20), wherein a first connection of the ventilation valve (17) terminates in a gas-tight manner with the end of the ventilation line (61) issuing in the mounting surface (20), and a second connection (62.2) of the ventilation valve terminates in a gas-tight manner with the end of the connection line (63) issuing in the mounting surface.

3. Valve arrangement as claimed in claim 1 or 2, **characterised in that**, in a block-like or plate-like construction, a vacuum valve (18) is held with a flat support surface lying on the mounting surface (20), wherein the base plate (15) has a connection line issuing on the one hand in the mounting surface (20) and on the other hand in the distribution line (40) and has a vacuum line formed by at least one bore in the base plate (15), which vacuum line emerges from a vacuum connection (65) in a side wall of the base plate (15) and issues in the mounting surface (20), wherein a first connection of the vacuum valve (18) terminates in a gas-tight manner with the end of the vacuum line issuing in the mounting surface (20), and a second connection of the vacuum valve terminates in a gas-tight manner with the end of the connection line issuing in the mounting surface (20).

4. Valve arrangement as claimed in any one of the preceding claims, **characterised in that** a non-return valve is disposed on the first shut-off valve (10.1, 11.1, 16.1) in order to prevent a return flow from the discharge connections (41, 42) or the distribution line (40) to the input connection (47) or the input line (1, 2).

5. Valve arrangement as claimed in claim 4, **characterised in that** the non-return valve is formed in a block-like or plate-like manner and is held lying on a further support surface of the first shut-off valve (16.1), wherein the valve-connecting lines are formed by bores in valve housings and are completely integrated therein.

6. Valve arrangement as claimed in any one of claims 1 to 5, **characterised in that** a support surface of the third shut-off valve (16.3) lies on the mounting surface (20) and the first (16.1) and second shut-off valve (16.2) have parallel support surfaces, wherein the first connection (54.1) of the first shut-off valve (16.1) is connected to the input line (46) by means of a line formed from mutually aligned bores (48.1, 48.2, 48.3) in the three shut-off valves.

7. Valve arrangement as claimed in any one of the preceding claims, **characterised in that** at least one shut-off valve is spring-loaded (28.1) in the closing direction.

8. Valve arrangement as claimed in any one of the preceding claims, **characterised in that** at least one shut-off valve has a pressure relieving means (25.1, 26.1).

9. Valve arrangement as claimed in claim 8, **characterised in that** the at least one shut-off valve (16.1) has a closure body (22.1) which cooperates with a valve seat (23.1) and which is connected to at least one relieving piston (25.1, 26.1), the diameter of which substantially corresponds to the diameter of the valve seat.

10. Valve arrangement as claimed in any one of the preceding claims, **characterised in that** at least one shut-off valve (16.1) has a control piston (31.1) which can be influenced by pressurised fluid.

11. Valve arrangement as claimed in any one of claims 1 to 10, **characterised in that** the first connection (54.1) of the first (16.1) and the second connection (55.3) of the third shut-off valve (16.3) are the connections which are on the closure body side when seen from a valve seat (23.1), so that when there is excess pressure at these connections an (additional) closing force is produced.

12. Valve arrangement as claimed in any one of claims 1 to 11, **characterised in that** the first connection (54.2) of the second shut-off valve (16.2) is the connection which is on the closure body side when seen from a valve seat, so that when there is excess pressure at this connection an (additional) closing force is produced.

13. Valve arrangement as claimed in any one of the preceding claims, **characterised in that** at least one shut-off valve (16.1) has an optical display and/or monitoring device (67, 68, 69, 70, 71), in particular with contact-free inductive sensors, to indicate the valve position.

## Revendications

1. Agencement de soupapes pour la commande et la distribution d'au moins un type de gaz, en particulier pour le remplissage de bouteilles de gaz, avec des mélanges formés de gaz différents, l'agencement de soupapes présentant une conduite de distribution (9, 40) commune pour tous les types de gaz et, pour chaque type de gaz, tant une conduite d'entrée (1, 2, 46) qu'également un agencement de soupapes d'amenée (10, 11, 16), branchées entre la conduite d'entrée (1, 2, 46) et la conduite de distribution (9, 40), **caractérisé en ce que** le (chaque) agencement de soupapes d'amenée (10, 11, 16) présente une première (10.1, 11.1, 16.1), une deuxième (10.2, 11.2, 16.2) et une troisième (10.3, 11.3, 16.3) soupapes d'isolement, où
a) un premier raccordement de la première soupape d'isolement (10.1, 11.1, 16.1) est relié à la conduite d'entrée (1, 2, 46),
b) un deuxième raccordement de la première soupape d'isolement (10.1, 11.1, 16.1), un premier raccordement de la deuxième soupape d'isolement (10.2, 11.2, 16.2) et un premier raccordement de la troisième soupape d'isolement (10.3, 11.3, 16.3) sont reliés ensemble,
c) un deuxième raccordement de la deuxième soupape d'isolement (10.2, 11.2, 16.2) est relié à l'air ambiant, et
d) un deuxième raccordement de la troisième soupape d'isolement (10.3, 11.3, 16.3) est relié à la conduite de distribution (9, 40),
où les trois soupapes d'isolement (16.1, 16.2, 16.3) sont réalisées en mode de construction en bloc, respectivement en plaque, présentent des faces de pose planes, et pour permettre un guidage commandé du passage d'un gaz avec celles-ci, sont maintenues posées sur une face de montage (20) plane d'une plaque de base (15), respectivement posées les unes sur les autres, avec une conduite de distribution (40), réalisée sous la forme de perçage central ménagé dans la plaque de base (15), conduite de distribution reliée à un raccordement de délivrance (41, 42), prévu en particulier pour assurer la liaison aux bouteilles de gaz à remplir, raccordement ménagé dans une paroi latérale de la plaque de base (15), avec une conduite d'entrée (46) formée par au moins un perçage (44, 45) ménagé dans la plaque de base (15), conduite d'entrée partant d'un raccordement d'entrée (47) prévu pour introduire un gaz, ménagé dans une paroi latérale de la plaque de base (15), et débouchant dans la plaque de montage (20), avec une conduite de liaison (57) débouchant, d'une part, dans la face de montage (20) et, d'autre part, dans la conduite de distribution (40), la conduite de liaison (57) étant ménagée dans la plaque de base (15), et où un premier raccordement (54.1) de la première soupape d'isolement (16.1) est relié à l'extrémité, débouchant dans la face de montage (20), de la conduite d'entrée (46), et un deuxième raccordement (55.1) de la première soupape d'isolement (16.1) étant fermé de façon étanche aux gaz avec l'extrémité, débouchant dans la face de montage (20), de la conduite de liaison (57), de manière que l'ensemble des conduites soit formé par des perçages, et soit intégré dans la plaque de base (15) et/ou le ou les boîtiers de soupapes, et que les raccordements d'entrée et de sortie de l'agencement de soupapes soient placés sur une ou plusieurs face(s) latérales de la plaque de base (15).

2. Agencement de soupapes selon la revendication 1, **caractérisé en ce qu'**une soupape de ventilation (17), réalisée en mode de construction en blocs ou en plaque, est maintenue posée par une face de pose plane sur la face de montage (20), où la plaque de base (15) présente une conduite de liaison (63) débouchant, d'une part, dans la face de montage (20) et, d'autre part, dans la conduite de distribution (40), et une conduite de ventilation (61), formée par au moins un perçage réalisé dans la plaque de base, la conduite de ventilation partant d'un raccordement de ventilation (60) ménagé dans une paroi latérale de la plaque de base (15), et débouchant dans la face de montage (20), où un premier raccordement de la soupape de ventilation (17) est fermé de façon étanche aux gaz avec l'extrémité, débouchant dans la face de montage (20), de la conduite de ventilation (61), et un deuxième raccordement (62.2) de la soupape de ventilation étant fermé de façon étanche aux gaz avec l'extrémité, débouchant dans la face de montage, de la conduite de liaison (63).

3. Agencement de soupapes selon la revendication 1 ou 2, **caractérisé en ce qu'**une soupape à vide (18), réalisée en mode de construction en blocs ou en plaque, est maintenue posée par une face de pose plane sur la face de montage (20), où la plaque de base (15) présente une conduite de liaison débouchant, d'une part, dans la face de montage (20) et, d'autre part, dans la conduite de distribution (40), et présente une conduite à vide formée par au moins un perçage ménagé dans la plaque de base (15), conduite à vide partant d'un raccordement à vide (65) ménagé dans une paroi latérale de la plaque de base (15) et débouchant dans la face de montage (20), où un premier raccordement de la soupape à vide (18) est fermé de façon étanche aux gaz avec l'extrémité, débouchant dans la face de montage (20), de la conduite à vide, et un deuxième raccordement de la soupape à vide est fermé de façon étanche aux gaz avec l'extrémité, débouchant dans la face de montage (20), de la conduite de liaison.

4. Agencement de soupapes selon l'une des revendications précédentes, **caractérisé en ce que** sur la première soupape d'isolement (10.1, 11.1, 16.1), est disposé un clapet anti-retour pour empêcher tout reflux depuis les raccordements de délivrance (41, 42), respectivement la conduite de distribution (40), vers le raccordement d'entrée (47), respectivement la conduite d'entrée (1, 2).

5. Agencement de soupapes selon la revendication 4, **caractérisé en ce que** le clapet anti-retour est réalisé en mode de construction en blocs ou en plaque, et est maintenu posé sur une face de pose supplémentaire de la première soupape d'isolement (16.1), les conduites reliant les soupapes étant formées par des perçages ménagés dans les boîtiers de soupapes et étant complètement intégrées dans ceux-ci.

6. Agencement de soupapes selon l'une des revendications 1 à 5, **caractérisé en ce qu'**une face de pose de la troisième soupape d'isolement (16.3) est posée sur la face de montage (20), et la première (16.1) et la deuxième soupape d'isolement (16.2) présentent des faces de pose parallèles, le premier raccordement (54.1) de la première soupape d'isolement (16.1) étant relié à la conduite d'entrée (46) par une conduite formée de perçages (48.1, 48.2, 48.3) alignés entre eux, ménagés dans les trois soupapes d'isolement.

7. Agencement de soupapes selon l'une des revendications précédentes, **caractérisé en ce qu'**au moins une soupape d'isolement est chargée dans la direction de la fermeture par un ressort (28.1).

8. Agencement de soupapes selon l'une des revendications précédentes, **caractérisé en ce qu'**au moins une soupape d'isolement présente une décharge de pression (25.1, 26.1).

9. Agencement de soupapes selon la revendication 8, **caractérisé en ce qu'**au moins une soupape d'isolement (16.1) présente un corps de fermeture ou opercule (22.1) coopérant avec un siège de soupape (23.1), opercule relié à au moins un piston de décharge (25.1, 26.1), dont le diamètre coïncide pratiquement avec le diamètre du siège de soupape.

10. Agencement de soupapes selon l'une des revendications précédentes, **caractérisé en ce qu'**au moins une soupape d'isolement (16.1) présente un piston de commande (31.1), susceptible d'être sollicité par un fluide sous pression.

11. Agencement de soupapes selon l'une des revendications 1 à 10, **caractérisé en ce que** le premier raccordement (54.1) de la première soupape d'isolement (16.1) et le deuxième raccordement (55.3) de la troisième soupape d'isolement (16.3) sont des raccordements situés du côté de l'opercule, en observant depuis un siège de soupape (23.1), de manière qu'une force de fermeture (supplémentaire) soit produite en cas de surpression sur ces raccordements.

12. Agencement de soupapes selon l'une des revendications 1 à 11, **caractérisé en ce que** le premier raccordement (54.2) de la deuxième soupape d'isolement (16.2), est le raccordement situé du côté opercule, en observant depuis un siège de soupape, de manière qu'une force de fermeture (supplémentaire) soit produite en cas de surpression sur ce raccordement.

13. Agencement de soupapes selon l'une des revendications précédentes, **caractérisé en ce qu'**au moins une soupape d'isolement (16.1) présente un affichage optique et/ou un dispositif de surveillance (67, 68, 69, 70, 71), en particulier avec des capteurs inductifs, sans contact, pour identifier la position des soupapes.
